# EUROPEAN PATENT APPLICATION

(11) **EP 4 756 746 A1**
(43) Date of publication of application: **10.06.2026**
(21) Application number: 24857954.2
(22) Date of filing: 17.06.2024
(51) Int. Cl.: G06V 40/12

(54) **IMAGE PROCESSING METHOD AND APPARATUS, DEVICE, AND MEDIUM**

(30) Priority: 25.08.2023 CN 202311080229
(71) Applicant: Tencent Technology (Shenzhen) Company Limited, Shenzhen, Guangdong 518057 (CN)
(72) Inventor: ZHANG, Zhenhong, Shenzhen, Guangdong 518057 (CN)
(74) Representative: EP&C
(86) International application number: PCT/CN2024/099622
(87) International publication number: WO 2025/044409

(57) **Abstract**

The present application discloses an image processing method and apparatus, a device, and a medium. The method comprises: acquiring a first sample image comprising a plurality of regional images; calling an attention-based network to identify a first regional image and a second regional image with different attention degrees among the plurality of regional images on the basis of an attention parameter; adding a first predicted label to the first regional image, and adding a second predicted label to the second regional image, wherein the first predicted label and the second predicted label are used for indicating different image definition; acquiring a first reference label of the first regional image and a second reference label of the second regional image; and correcting the attention parameter on the basis of the difference between the first predicted label and the first reference label and the difference between the second predicted label and the second reference label, wherein the corrected attention parameter is used for extracting an embedded feature for classification of a palmprint image. Use of the present application can improve the accuracy of extraction of embedded features of palmprint images and the accuracy of classification of palmprint images.

## Description

### RELATED APPLICATION

This application claims priority to Chinese Patent Application No. 2023110802296, filed with the China National Intellectual Property Administration on August 25, 2023 and entitled "IMAGE PROCESSING METHOD AND APPARATUS, DEVICE, AND MEDIUM", which is incorporated herein by reference in its entirety.

### FIELD OF THE TECHNOLOGY

This application relates to the field of artificial intelligence technologies, and in particular, to an image processing method and apparatus, a device, and a medium.

### BACKGROUND OF THE DISCLOSURE

In a scenario of classifying a palm print image, the palm print image is usually first embedded by using a feature extraction network, to extract an embedding feature of the palm print image, and then the palm print image is classified by using the embedding feature.

The palm print image is photographed by using a camera, and the palm print image may include several regions with different definitions. In an existing application, a palm print image may be directly embedded by using a feature extraction network. In this process, the feature extraction network may pay too much attention to an image of an unclear region in the palm print image, and a feature of the image of the unclear region is usually inaccurate. Consequently, an embedding feature extracted from the palm print image is inaccurate, and further, a classification result of the palm print image is also inaccurate.

### SUMMARY

This application provides an image processing method and apparatus, a device, and a medium, to improve accuracy of extracting an embedding feature of a palm print image, thereby improving accuracy of classifying the palm print image.

An aspect of this application provides an image processing method. The method includes:
obtaining a first sample image, wherein the first sample image is segmented into a plurality of non-overlapped regions;
assigning, by an attention-based network, an attention weight for each of the plurality of regions;
generating a first predicted clarity label for each of the plurality of regions based on weight ranges that their respective attention weights fall in; wherein a mapping relationship between the weight ranges and clarity labels are preconfigured, such that a higher weight range corresponds to a clarity label indicative of a higher clarity quality;
obtaining a first reference clarity label of each of the plurality of regions; and
training the attention-based network based on a difference between the first predicted clarity label and the first reference clarity label of each of the plurality of regions to obtain a trained attention-based network applicable in a palm print recognition network.

An aspect of this application provides an image processing apparatus. The apparatus includes:
a first obtaining module, configured to obtain a first sample image, wherein the first sample image is segmented into a plurality of regions;
an invoking module, configured to invoke an attention-based network to assign an attention weight for each of the plurality of regions;
an addition module, configured to generate a first predicted clarity label for each of the plurality of regions based on weight ranges that their respective attention weights fall in; wherein a mapping relationship between the weight ranges and clarity labels are preconfigured, such that a higher weight range corresponds to a clarity type indicative of a higher clarity quality;
a second obtaining module, configured to obtain a first reference clarity label of each of the plurality of regions; and
a training module, configured to train the attention-based network based on a difference between the first predicted clarity label and the first reference label of each of the plurality of regions to obtain a trained attention-based network applicable in a palm print recognition network.

An aspect of this application provides a computer device, including a memory and a processor, the memory having a computer program stored therein, and the computer program, when executed by the processor, causing the processor to perform the method according to an aspect in this application.

An aspect of this application provides a computer-readable storage medium, the computer-readable storage medium having a computer program stored therein, and the computer program, when executed by a processor, causing the processor to perform the method according to an aspect in this application.

An aspect of this application provides a computer program product. The computer program product includes a computer program. The computer program is stored in a computer-readable storage medium. A processor of a computer device reads the computer program from the computer-readable storage medium, and the processor executes the computer program, to cause the computer device to perform the method provided in various optional implementations of the foregoing aspect.

The first sample image in this application may segmented into a plurality of regions. For the plurality of regions, if clarities of the regions are different, clarity types of the regions may be different. In other words, in this application, the first sample image may be divided based on different clarities of images of respective parts of the first sample image. In this way, in this embodiment, an attention-based network can be invoked to perform attention degree recognition on the plurality of regions, to obtain a first region and a second region of the plurality of regions. The attention-based network comprises an attention parameter, and the attention-based network determines, based on the attention parameter, that an attention degree to the first region is higher than an attention degree to the second region. Therefore, in this application, a first predicted label can be added to the first region and a second predicted label can be added to the second region based on the respective attention degrees of the attention-based network to the first region and the second region. The first predicted label is used for indicating that the first region belongs to a first predicted clarity type, the second predicted label is used for indicating that the second region belongs to a second predicted clarity type, and a clarity indicated by the first predicted clarity type is higher than a clarity indicated by the second predicted clarity type. In other words, in this application, a region to which the attention-based network pays more attention may be marked with a predicted label indicating a higher image definition. In addition, in this application, a first reference label of the first region and a second reference label of the second region can be obtained. The first reference label is used for indicating a first reference clarity type that the first region actually belongs to, and the second reference label is used for indicating a second reference clarity type that the second region actually belongs to. Therefore, in this application, the attention parameter of the attention-based network can be corrected based on a difference between the first predicted label and the first reference label and a difference between the second predicted label and the second reference label. Subsequently, the attention-based network can extract an embedding feature of a palm print image based on the corrected attention parameter. The embedding feature can be used for identifying an owner of a palm print in the palm print image. It can be learned that, the method provided in this embodiment can add, by using an attention degree of the attention-based network to the region in the first sample image, the predicted label to the region of the first sample image, and a clarity of a clarity type indicated by a predicted label added for a region with a higher attention degree may be higher. Further, the attention parameter may be corrected according to the difference between a real label (for example, the reference label) and the predicted label of the region. Subsequently, the attention-based network can adopt a higher attention degree for a region with a higher clarity in the palm print image by using the corrected attention parameter, and adopt a lower attention degree for a region with a lower clarity in the palm print image, so that an image feature of the region with the higher clarity in the palm print image can be extracted to a greater extent, and finally a more accurate embedding feature of the palm print image is extracted. More accurate classification on the palm print image (that is, more accurate identification on an owner of the palm print in the palm print image) can be implemented by using the more accurate embedding feature of the palm print image.

### BRIEF DESCRIPTION OF THE DRAWINGS

FIG. 1 is a schematic structural diagram of a network architecture for palm print image processing according to various embodiments of this application.
FIG. 2 is a schematic diagram of a scenario of correcting a network parameter according to various embodiments of this application.
FIG. 3 is a schematic flowchart of an image processing method according to various embodiments of this application.
FIG. 4 is a schematic flowchart of training an image segmentation network according to various embodiments of this application.
FIG. 5 is a schematic diagram of a scenario of correcting an attention parameter according to various embodiments of this application.
FIG. 6 is a schematic flowchart of a network training method according to various embodiments of this application.
FIG. 7 is a schematic diagram of a scenario of training a palm print recognition network according to various embodiments of this application.
FIG. 8 is a schematic diagram of a scenario of generating a target embedding feature according to various embodiments of this application.
FIG. 9 is a schematic diagram of a scenario of palm print prediction according to various embodiments of this application.
FIG. 10 is a schematic structural diagram of an image processing apparatus according to various embodiments of this application.
FIG. 11 is a schematic structural diagram of a computer device according to various embodiments of this application.

### DESCRIPTION OF EMBODIMENTS

This application relates to artificial intelligence-related technologies. Artificial intelligence (AI) is a theory, a method, a technology, and an application system that use a digital computer or a machine controlled by the digital computer to simulate, extend, and expand human intelligence, perceive an environment, obtain knowledge, and use knowledge to obtain an optimal result. In other words, the artificial intelligence is a comprehensive technology in computer science. The artificial intelligence attempts to understand an essence of intelligence, and produces a new intelligent machine that can react in a manner similar to the human intelligence. The artificial intelligence is to study the design principles and implementation methods of various intelligent machines, to enable the machines to have the functions of perception, reasoning, and decision-making.

The artificial intelligence technology is a comprehensive discipline, and relates to a wide range of fields, including both hardware-level technologies and software-level technologies. Basic technologies of the artificial intelligence usually include technologies such as a sensor, a dedicated artificial intelligence chip, cloud computing, distributed storage, big data processing technologies, an operating/interaction system, and electromechanical integration. The artificial intelligence software technologies mainly include several major directions such as a computer vision technology, a speech processing technology, a natural language processing technology, and machine learning/deep learning.

This application mainly relates to machine learning in artificial intelligence. Machine learning (ML) is a multi-domain interdisciplinary subject, relates to multi-domain subjects such as probability theory, statistics, approximation theory, convex analysis, and algorithm complexity theory, and specially studies how a computer simulates or implements a human learning behavior, to obtain new knowledge or skills, and reorganize an existing knowledge structure to continuously improve its performance. The machine learning, as a core of the artificial intelligence, is a fundamental way to make the computer intelligent, and is applied throughout various fields of the artificial intelligence. The machine learning and the deep learning usually include technologies such as an artificial neural network, a belief network, reinforcement learning, transfer learning, inductive learning, and demonstration learning.

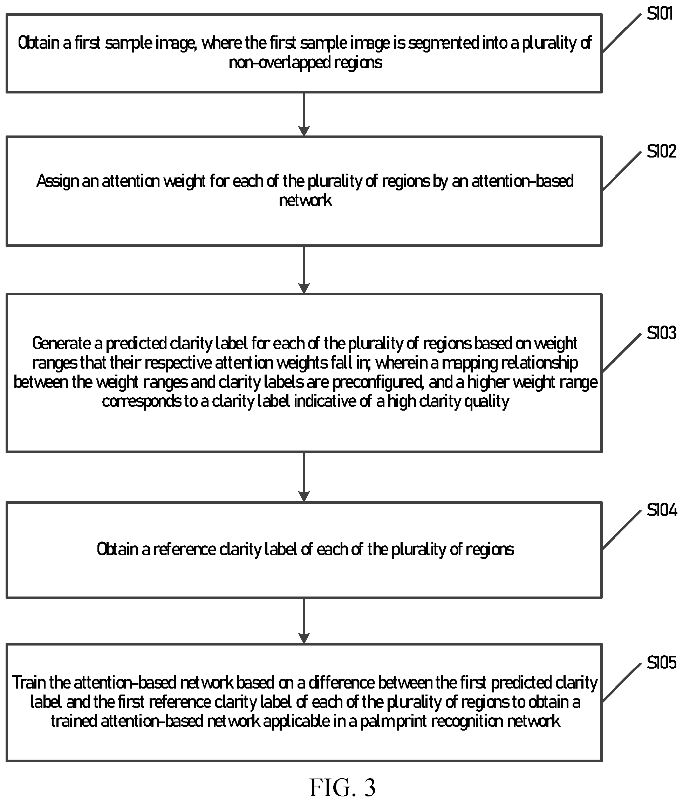

Machine learning involved in this application mainly refers to how to obtain a palm print recognition network through training, to accurately classify a palm print category of a palm print image by using the trained palm print recognition network. For a specific procedure, refer to the related descriptions in the embodiment corresponding to FIG. 3.

First, all data (all relevant data such as palm print images) acquired in this application are acquired with the consent and authorization of an object (such as a user, an institution, or an enterprise) to which the data belongs, and the acquisition, use, and processing of relevant data need to comply with the relevant laws, regulations, and standards of relevant countries and regions.

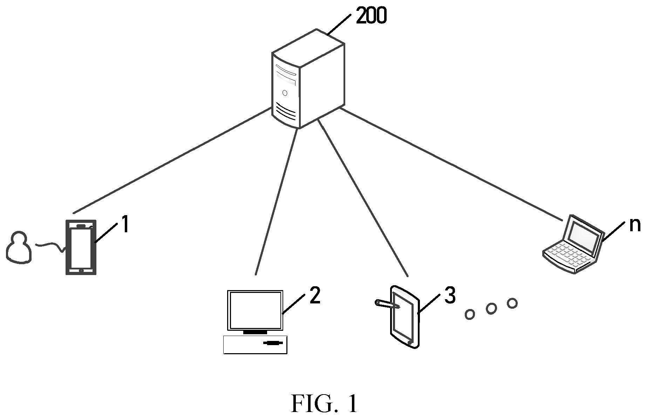

Referring to FIG. 1, FIG. 1 is a schematic structural diagram of a network architecture for palm print image processing according to various embodiments of this application. As shown in FIG. 1, the network architecture may include a server 200 and a terminal device cluster. The terminal device cluster may include one terminal device or a plurality of terminal devices. A quantity of terminal devices is not limited herein. As shown in FIG. 1, the plurality of terminal devices may specifically include a terminal device 1, a terminal device 2, a terminal device 3, ..., and a terminal device n. As shown in FIG. 1, the terminal device 1, the terminal device 2, the terminal device 3, ..., and the terminal device n may all be in a network connection with the server 200, so that each terminal device can exchange data with the server 200 through the network connection.

The server 200 shown in FIG. 1 may be an independent physical server, a server cluster or distributed system including a plurality of physical servers, or a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. The terminal device may be an intelligent terminal such as a smartphone, a tablet computer, a notebook computer, a desktop computer, an in-vehicle terminal, or a smart television. Communication between the terminal device 1 and the server 200 is used as an example below to describe embodiments of this application in detail.

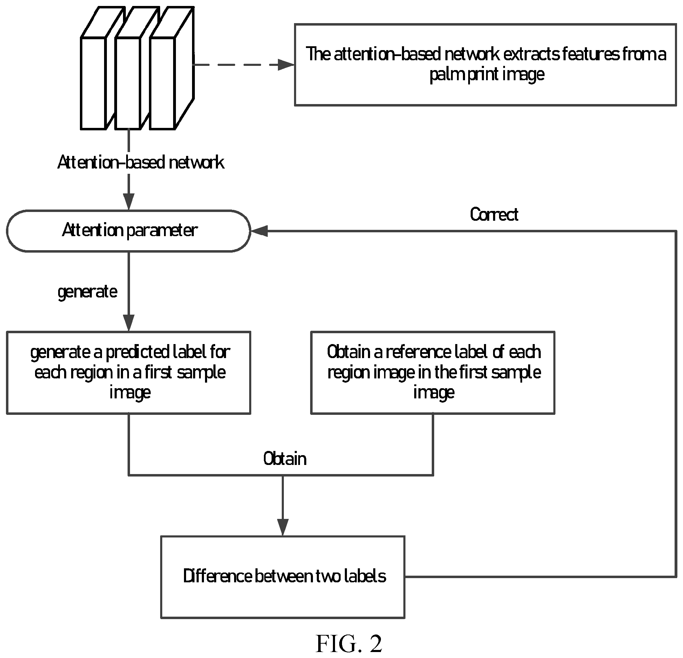

Referring to FIG. 2 together, FIG. 2 is a schematic diagram of a scenario of correcting a network parameter according to various embodiments of this application. As shown in FIG. 2, a server 200 may correct an attention parameter of an attention mechanism network (i.e., attention-based network, which is a neural network architecture that integrates an attention mechanism to dynamically assign variable weights to input elements based on their contextual relevance, enabling the model to selectively focus on salient features while suppressing noise or irrelevant information) by using a first sample image. The first sample image may include a plurality of regions (local images belonging to the first sample image, also referred to as sub-images, the sub-images are non-overlapped with each other and cover the whole first sample image). The attention-based network may determine attention degrees of regions in an input image (for example, the first sample image) by using the attention parameter.

Therefore, the server 200 may add a predicted label for each region in the first sample image by using the attention parameter of the attention-based network. The predicted label may be a label of a clarity type of each region in the first sample image and determined by using the attention parameter of the attention-based network. For example, a region that the attention-based network pays more attention may be marked with a label of a clarity type of a higher definition.

The server 200 may further obtain a reference label of each region in the first sample image. The reference label may be used for indicating an actual clarity type of each region in the first sample image.

Therefore, the server 200 may correct the attention parameter of the attention-based network based on a difference between the predicted label and the reference label of each region in the first sample image, so that the attention-based network can pay more attention to a feature of an image of a clearer region in the input image by using the corrected attention parameter.

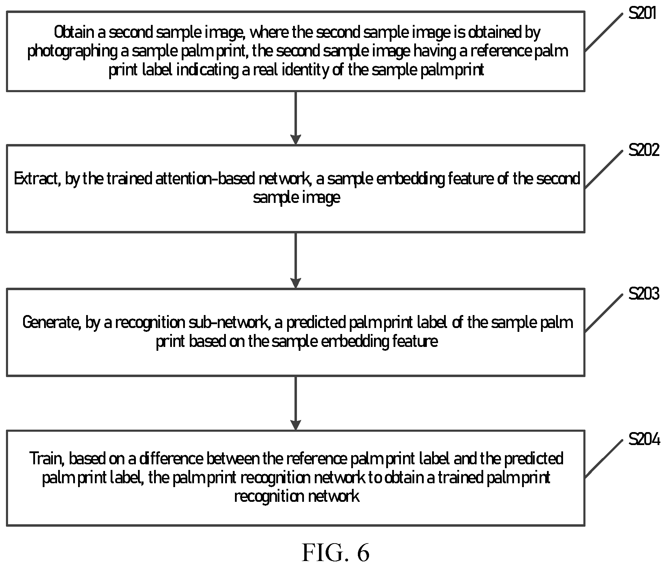

Subsequently, the attention-based network may be used as a network for extracting a feature of a palm print image in a palm print identification scenario. The attention-based network may perform embedding on an input palm print image by using the attention parameter corrected according to the foregoing manner, to generate an accurate embedding feature of the palm print image, and then accurate classification of a palm print category of the palm print image can be implemented by using the embedding feature. The palm print image may be an image obtained by the terminal device 1 by photographing a palm print of a user. The terminal device 1 may send the acquired palm print image to the server 200, to request the server 200 to classify a palm print category of the palm print image, so that the server 200 can invoke the attention-based network to classify the palm print category of the palm print image by using the corrected attention parameter. For a specific procedure, refer to the related descriptions in the following embodiments corresponding to FIG. 3 and FIG. 6.

By using the method in this embodiment of this application, the attention-based network can pay more attention to an image feature of a clearer region in an input palm print image, so that a more accurate embedding feature of the palm print image can be extracted, and more accurate classification on the palm print category of the palm print image can also be implemented by using the accurate embedding feature of the palm print image.

Referring to FIG. 3, FIG. 3 is a schematic flowchart of an image processing method according to various embodiments of this application. An execution body in this embodiment of this application may be an image processing device. The image processing device may be a computer device or a computer device cluster including a plurality of computer devices. The computer device may be a server, a terminal device, or another device. This is not limited. As shown in FIG. 3, the method may include the following operations.

Operation S101: Obtain a first sample image, where the first sample image is segmented into a plurality of non-overlapped regions.

In various embodiments, the image processing device may obtain the first sample image. The first sample image may be divided into a plurality of regions. In other words, the first sample image may be divided into the plurality of regions, and each region may be a local image in the first sample image. In other words, the first sample image may be divided into a plurality of image blocks (namely, the plurality of regions), a size of each image block may be determined according to an practical application scenario (may be a preset division size), and sizes of the image blocks may be the same.

The plurality of regions may be of the same clarity level, or different clarity levels (also referred to as image clarity levels). The clarity level of the image may refer to sharpness of change of an edge of image details, in other words, clarity of the image details and boundaries thereof, it is a quantified grade of visual sharpness, detail retention, and noise suppression in a digital image. In this application, if clarity levels of the regions are different, it may be considered that clarity types of the regions are different. The clarity type of an image may be understood as the clarity level of the image, which may refer to a clarity range obtained by dividing the clarity of the image, and one clarity level may correspond to one clarity range. Each clarity type of an image may be used for indicating its corresponding clarity (an image clarity), for example, indicating its corresponding clarity level. The higher the clarity level of the image, the higher clarity indicated by the image (that is, the clearer the image). Conversely, the lower the clarity level of the image, the lower clarity indicated by the image (that is, the less clear the image).

For example, there may be at least two clarity types of the image. The two may include a blurry clarity type and a clear (or high clarity) clarity type. As the name implies, a clarity (blurry clarity) indicated by the blurry clarity type is lower than a clarity (clear clarity) indicated by the clear clarity type. Alternatively, on this basis, the clarity type may be classified into finer clarity types based on clarity degrees. For example, clarity types of the image may include a blurry (for example, low clarity) clarity type, a standard clarity type, a high clarity type, an ultra-high clarity type, and the like. Clarities indicated by the clarity types may be sequentially ascending. For example, a clarity indicated by the standard clarity type is higher than a clarity indicated by the blurry clarity type, a clarity indicated by the high clarity type is higher than the clarity indicated by the standard clarity type, and a clarity indicated by the ultra-high clarity type is higher than the clarity indicated by the high clarity type.

The categories of the clarity types of the image and specific clarity types included may be set arbitrarily according to an actual application scenario, and this is not limited. That the clarities of the regions are different means that the regions have different clarity levels.

In other words, the first sample image may include regions of at least two clarity types, and one region may have one clarity type. A specific quantity of first sample images may be determined according to an actual application scenario.

Operation S102: assign an attention weight for each of the plurality of regions by an attention-based network.

In various embodiments of this application, the attention-based network may perform attention degree recognition on the input image (for example, the first sample image) in a unit of each region obtained by dividing the input image. Therefore, the image processing device may invoke the attention-based network to perform identification (for example, attention degree recognition) on the plurality of regions of the first sample image, to obtain the first region and the second region of the plurality of regions.

The attention-based network is a network (namely, a model) having an attention mechanism. A core idea of the attention mechanism is to simulate an attention process of human beings on an input of the network. To be specific, the network can automatically determine which part of input data needs to be concerned about when data processing is performed, so that the network can effectively capture key information of the input data. For example, the attention-based network includes, but is not limited to, a Transformer (a neural network based on a self-attention mechanism), a GAT (a graph attention-based network), and the like. The attention-based network may include an attention parameter (which belongs to a weight parameter, and is a network parameter of the attention-based network). The attention-based network may determine, by using the attention parameter, that an attention degree of the first region is higher than an attention degree (that is, a concern degree) of the second region, or in other words, the attention degree paid to the first region by the attention-based network is higher than attention degree paid to the second region. The attention degree paid to each region by the attention-based network may be determined by using the attention parameter of the attention-based network, as described in the following content.

The attention-based network may perform, by using the foregoing attention parameter, identification (that is, feature learning) on the first sample image in a unit of each region of the first sample image, to identify (that is, learn) an attention weight of the attention-based network for each region. The attention-based network may have one attention weight for one region, and the attention weight of the attention-based network for the region may be used for reflecting an attention degree of the attention-based network to the region. A higher attention weight indicates a higher attention degree. Otherwise, a lower attention weight indicates a lower attention degree. A value range of the attention weight may be [0, 1].

It can be learned from the above that, the attention-based network may obtain, by using the attention parameter and in a unit of each image block (that is, each region) of the first sample image, the attention weight of each image block of the first sample image. In other words, which image block of the input image (for example, the first sample image) is paid more attention by the attention-based network and which image block of the input image is paid less attention by the attention-based network can be learned by using the attention parameter of the attention-based network.

Optionally, the value range [0, 1] of the attention weight may be divided based on a quantity of clarity types of the image, to obtain a plurality of weight ranges of the attention weight through division. One clarity type may correspond to one weight range of the attention weight. A higher clarity indicated by a clarity type indicates a higher weight value in the weight range corresponding to the clarity type. A combination of all weight ranges may be the entire value range [0, 1] of the attention weight.

For example, if there are two clarity types of the image, including a blurry clarity type and a clear clarity type, the value range of the attention weight may be divided into two weight ranges, for example, divided into a weight range [0, 0.5) and a weight range [0.5, 1]. The weight range [0, 0.5) may be a weight range corresponding to the blurry clarity type, the weight range [0.5, 1] may be a weight range corresponding to the clear clarity type, and the weight ranges do not overlap each other.

Therefore, the attention weight of the first region and the attention weight of the second region may be respectively in the two weight ranges obtained through division, and the attention weight of the first region is greater than the attention weight of the second region, in other words, weight values in a weight range to which the attention weight of the first region belongs are greater than weight values in a weight range to which the attention weight of the second region belongs.

Any two weight ranges of the plurality of weight ranges obtained by dividing the value range of the attention weight may be referred to as a first weight range and a second weight range, and weight values in the first weight range are greater than weight values in the second weight range. For example, the weight range [0.5, 1] may be the first weight range, and the weight range [0, 0.5) may be the second weight range.

Therefore, in this application, a region of the plurality of regions of the first sample image and whose attention weight is in a first weight range can be used as the first region, and a region of the plurality of regions whose attention weight is in a second weight range can be used as the second region. There may be one or more first regions and second regions, and specific quantities of the first regions and the second regions may be determined according to an actual application scenario.

In this embodiment, regions (to be specific, the first region and the second region) of two clarity types are used as an example for description. Actually, regions of all clarity types may be (or need to be) processed in a same processing manner, to correct the attention parameter of the attention-based network. For example, when an image has more than two clarity types, there may also be more than two weight ranges. The attention weight of the attention-based network for the first region and the attention weight of the attention-based network for the second region may be respectively in different weight ranges. The first region and the second region may be regions whose attention weights are in any two weight ranges of the more than two weight ranges. In addition, weight values in the weight range to which the attention weight of the attention-based network for the first region belongs is greater than weight values in the weight range to which the attention weight of the attention-based network for the second region belongs. In other words, regions with attention weights falling within two weight ranges of the more than two weight ranges may be respectively used as the corresponding first region and second region, to perform the related processing in this embodiment of this application.

For example, if there are three clarity types of the image, including a blurry clarity type, a standard clarity type, and a clear clarity type, the value range of the attention weight may be divided into three weight ranges, for example, may be divided into a weight range [0, 0.33), a weight range [0.33, 0.66), and a weight range [0.66, 1]. The weight range [0, 0.33) may correspond to the blurry clarity type, the weight range [0.33, 0.66) may correspond to the standard clarity type, and the weight range [0.66, 1] may correspond to the clear clarity type.

For a region whose attention weight is within the weight range [0, 0.33) and a region whose attention weight is within the weight range [0.33, 0.66), the region whose attention weight is within the weight range [0, 0.33) may be used as the second region, and the region whose attention weight is within the weight range [0.33, 0.66) may be used as the first region, to perform the related processing described in this embodiment of this application.

For a region whose attention weight is within the weight range [0.33, 0.66) and a region whose attention weight is within the weight range [0.66, 1], the region whose attention weight is within the weight range [0.33, 0.66) may be used as the second region, and the region whose attention weight is within the weight range [0.66, 1] may be used as the first region, to perform the related processing described in this embodiment of this application.

Moreover, for a region whose attention weight is within the weight range [0, 0.33) and a region whose attention weight is within the weight range [0.66, 1], the region whose attention weight is within the weight range [0, 0.33) may be used as the second region, and the region whose attention weight is within the weight range [0.66, 1] may be used as the first region, to perform the related processing described in this embodiment of this application.

When there are more than three clarity types of the image, corresponding processing may also be performed according to the foregoing principle. A specific quantity of clarity types of the image and a quantity of weight ranges that need to be obtained through division can both be determined according to an actual application scenario. This is not limited in this application.

Operation S103: generate a predicted clarity label for each of the plurality of regions based on weight ranges that their respective attention weights fall in; wherein a mapping relationship between the weight ranges and clarity labels are preconfigured, such that a higher weight range corresponds to a clarity label indicative of a higher clarity quality.

In various embodiments, the image processing device may add a corresponding predicted label for each region by using a weight range to which an attention weight of the attention-based network for each region belongs and a clarity type corresponding to each weight range, as described in the following content.

The image processing device may add the first predicted label to the first region by using the attention weight (namely, the attention degree) of the attention-based network to the first region. For example, the image processing device may add the first predicted label for the first region by using the clarity type corresponding to the weight range to which the attention weight of the first region belongs. The first predicted label may be used for indicating that the clarity type of the first region belongs to the first predicted clarity type, and the first predicted clarity type is a clarity type corresponding to the weight range to which the attention weight of the first region belongs. The first predicted clarity type may be understood as a clarity type determined (that is, predicted) by the attention-based network for the first region based on the attention parameter.

Similarly, the image processing device may add the second predicted label to the second region by using the attention weight (namely, the attention degree) of the attention-based network to the second region. For example, the image processing device may add the second predicted label for the second region by using the clarity type corresponding to the weight range to which the attention weight of the second region belongs. The second predicted label may be used for indicating that the clarity type of the second region belongs to the second predicted clarity type, and the second predicted clarity type is a clarity type corresponding to the weight range to which the attention weight of the second region belongs. The second predicted clarity type may be understood as a clarity type determined (that is, predicted) by the attention-based network for the second region based on the attention parameter.

In addition, an image clarity indicated by the first predicted clarity type is higher than an image clarity indicated by the second predicted clarity type.

By using the foregoing process of adding the predicted label (including the first predicted label and the second predicted label) for the first region and the second region, in this embodiment, a predicted label of a clarity type indicating a higher clarity may be added for a region that the attention-based network pays more attention. Subsequently, the attention parameter of the attention-based network is corrected in this manner, so that the attention-based network may pay more attention to a clearer region in the input image and pay less attention to a blurrier region in the input image based on the corrected attention parameter.

Operation S104: Obtain a reference clarity label of each of the plurality of regions.

In various embodiments, the image processing device may obtain the reference label (i.e., the reference clarity label) of the first region and the reference label (i.e., the reference clarity label) of the second region. The reference label of the first region may be referred to as the first reference label (i.e., first reference clarity label), and the reference label of the second region may be referred to as the second reference label (i.e., second reference clarity label).

The first reference label may be a label of an actual clarity type of the first region, and the second reference label may be a label of an actual clarity type of the second region.

The first reference label may be used for indicating that the clarity type of the first region belongs to the first reference clarity type, that is, the actual clarity type of the first region may be the first reference clarity type. Similarly, the second reference label may be used for indicating that the clarity type of the second region belongs to the second reference clarity type, that is, the actual clarity type of the second region may be the second reference clarity type.

The first reference clarity type and the second reference clarity type each may be any one of the at least two clarity types set for the image.

In various embodiments, the first reference label of the first region and the second reference label of the second region may be obtained by using a trained clarity classification network, as described in the following content:

The image processing device may invoke the trained clarity classification network to perform classification prediction on a clarity of the first region, to obtain the first reference clarity type of the first region. The first reference clarity type is an actual clarity type of the first region predicted by using the trained clarity classification network.

Similarly, the image processing device may invoke the trained clarity classification network to perform classification prediction on a clarity of the second region, to obtain the second reference clarity type of the second region. The second reference clarity type is an actual clarity type of the second region predicted by using the trained clarity classification network. The clarity classification network is a deep learning model designed to assess or classify the clarity of images and videos. Its core purpose is to quantify the clarity level of visual content (e.g., SD, HD, 4K) through automated methods. It typically employs a convolutional neural network (CNN) or transformer architecture, learning through training to extract discriminative information related to clarity from pixel-level features, thereby mapping input images or video frames to predefined clarity categories (e.g., 720P, 1080P, 4K) or directly outputting a continuous clarity score.

Therefore, the image processing device can add the first reference label for the first region by using the first reference clarity type. The first reference label is used for indicating that the clarity type of the first region is the first reference clarity type.

The image processing device may further add the second reference label for the second region by using the second reference clarity type. The second reference label is used for indicating that the clarity type of the second region is the second reference clarity type.

For example, a process of obtaining the trained clarity classification network through training may include: The image classification network may obtain a third sample image and a clarity classification network that needs to be trained, where the third sample image has a clarity label, and the clarity label is used for indicating a real clarity type of the third sample image (that is, an actual clarity type of the third sample image). In various embodiments of this application, there may be several third sample images. The several third sample images may include sample images of various clarity types (including all clarity types preconfigured for the image), and are used for training the clarity classification network that needs to be trained.

Further, the image processing device may invoke the clarity classification network that needs to be trained, and perform classification prediction on the clarity type of the third sample image, to obtain a predicted clarity type of the third sample image. The predicted clarity type is the clarity type of the third sample image obtained through prediction by using the clarity classification network that needs to be trained.

Then, the image processing device may correct a network parameter of the clarity classification network that needs to be trained based on a difference (which may be reflected by a cross entropy loss between the real clarity type and the predicted clarity type) between the real clarity type and the predicted clarity type of the third sample image, to obtain the trained clarity classification network.

Moreover, the image processing device may further invoke a trained image segmentation network, to obtain the first reference label of the first region and the second reference label of the second region. The process may include the following operations:

The trained image segmentation network is a network obtained through training and that can be used for segmenting parts of images with different clarity types in the input image. For example, the trained image segmentation network may include, but is not limited to, U-Net (a convolutional neural network). Therefore, the image processing device may invoke the trained image segmentation network to perform image segmentation on the first sample image, to obtain a plurality of segmented images of the first sample image. Each segmented image may be a local image in the first sample image. One segmented image may correspond to one clarity type, that is, one segmented image has one clarity type. The clarity type corresponding to each segmented image may alternatively be obtained through identification by the trained image segmentation network when performing segmentation to obtain the segmented image.

Further, the image processing device may use a segmented image having the highest coincidence degree (that is, having the largest image coincidence regions) with the first region in the plurality of segmented images as a first clarity matching image of the first region, and further, may add the first reference label for the first region based on a clarity type corresponding to the first clarity matching image. The first reference clarity type indicated by the first reference label may be the clarity type corresponding to the first clarity matching image.

Similarly, the image processing device may use a segmented image having the highest coincidence degree (that is, having the largest image coincidence regions) with the second region in the plurality of segmented images as a second clarity matching image of the second region, and further, may add the second reference label for the second region based on a clarity type corresponding to the second clarity matching image. The second reference clarity type indicated by the second reference label may be the clarity type corresponding to the second clarity matching image.

In various embodiments, the image processing device may use either of the foregoing two manners (the manner based on the trained clarity classification network and the manner based on the trained image segmentation network) to pre-add a corresponding reference label for each region in the first sample image, so that in operation S104, the reference label (including the first reference label and the second reference label) pre-added for the first region and the second region can be directly obtained.

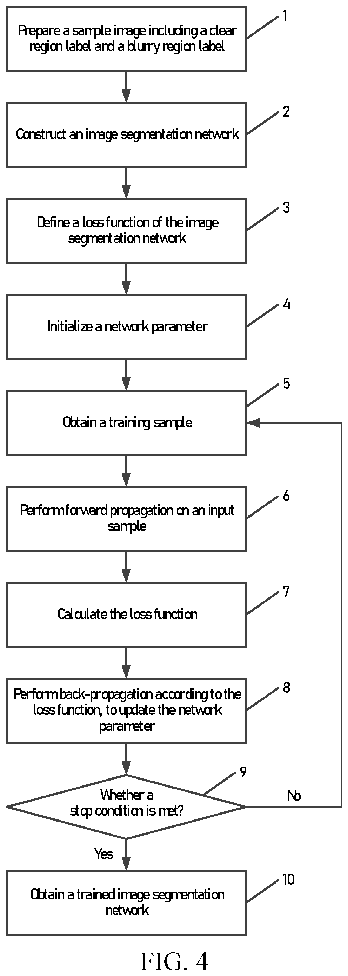

Referring to FIG. 4, FIG. 4 is a schematic flowchart of training an image segmentation network according to various embodiments of this application. As shown in FIG. 4, the procedure may include the following operations.
1. It is assumed that clarity types set for an image includes a clear clarity type and a blurry clarity type, and therefore, the image processing device may prepare a sample image including a clear region label and a blurry region label. The clear region label may be a label for an image of a clear region in the sample image, and the clear region label is a label of the clear clarity type. The blurry region label may be a label for an image of a blurry region in the sample image, and the blurry region label is a label of the blurry clarity type.
2. The image processing device may construct an image segmentation network. For example, the image processing device may construct a U-Net network as the image segmentation network.
3. The image processing device may define a loss function of the image segmentation network. For example, the loss function may be a cross-entropy loss between a predicted clear region and a predicted fuzzy region and an actual clear region and an actual blurry region indicated by region labels (including the clear region label and the blurry region label) marked for the sample image.
4. The image processing device may perform initialization on a network parameter of the image segmentation network, for example, perform random initialization, to further start training the image segmentation network.
5. The image processing device may obtain a sample (belonging to the sample image prepared in operation 1) for training the image segmentation network in a current round.
6. The image processing device may input an obtained sample into the image segmentation network for forward propagation, to predict and identify a clear region and a blurry region in the input sample image.
7. The image processing device may calculate the loss function of the image segmentation network based on a difference (which may be reflected by a cross-entropy loss) between a clear region obtained through prediction and identification and the actual clear region marked by the clear region label, and a difference (which may be reflected by a cross-entropy loss) between a blurry region obtained through prediction and identification and the actual blurry region marked by the blurry region label.
8. The image processing device may perform back propagation in the image segmentation network by using the calculated loss function, to correct (that is, update) the network parameter of the image segmentation network.
9. The image processing device may determine whether a stop condition is currently met. The stop condition may be a condition for determining whether the image segmentation network is trained. For example, the stop condition may be that the network parameter of the image segmentation network is trained to a convergent state, or the stop condition may be that a round number of iterative training on the image segmentation network is greater than or equal to a quantity threshold, and the like. Therefore, if the stop condition is met, the image processing device may perform the following operation 10, or if the stop condition is not met, the image processing device may repeatedly perform the foregoing operation 5, to start a next round of iterative training on the image segmentation network.
10. Use the image segmentation network obtained through training at this time as the trained image segmentation network.

Operation S105: train the attention-based network based on a difference between the first predicted clarity label and the first reference clarity label of each of the plurality of regions to obtain a trained attention-based network applicable in a palm print recognition network.

Optionally, the image processing device may correct the attention parameter of the attention-based network based on the difference between the first predicted label and the first reference label, and the difference between the second predicted label and the second reference label. The difference between the first predicted label and the first reference label may be reflected by a cross-entropy loss between the first predicted label and the first reference label, and the difference between the second predicted label and the second reference label may be reflected by a cross-entropy loss between the second predicted label and the second reference label.

In other words, the attention parameter of the attention-based network may be modified based on the cross-entropy loss between the first predicted label and the first reference label and the cross-entropy loss between the second predicted label and the second reference label (for example, a sum of the two cross-entropies). An objective of the correction may be to make the sum of the cross-entropy tend to be a minimum value (for example, 0).

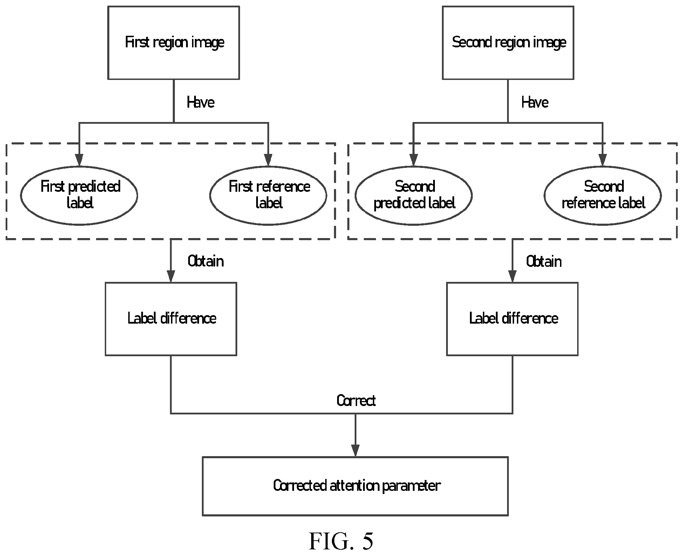

Referring to FIG. 5, FIG. 5 is a schematic diagram of correcting an attention parameter according to various embodiments of this application. As shown in FIG. 5, the first region may have a first predicted label and a first reference label, and the second region may have a second predicted label and a second reference label.

The image processing device may obtain a difference between the first predicted label and the first reference label of the first region. For example, the difference may be a cross-entropy loss between the first predicted label and the first reference label. In other words, the cross-entropy loss may be used for reflecting the difference between the first predicted label and the first reference label. The image processing device may further obtain a difference between the second predicted label and the second reference label of the second region. For example, the difference may be a cross-entropy loss between the second predicted label and the second reference label. In other words, the cross-entropy loss may be used for reflecting/representing the difference between the second predicted label and the second reference label.

Further, the image processing device may correct the attention parameter of the attention-based network by using the cross-entropy loss between the first predicted label and the first reference label, and the cross-entropy loss between the second predicted label and the second reference label that are obtained above, to obtain the corrected attention parameter.

Based on the foregoing principle, the attention-based network, by using the corrected attention parameter, can pay more attention to a region having a higher clarity in an input image (such as a palm print image), and pay less attention to a region having a lower clarity in the input image. Therefore, subsequently, the attention-based network can more accurately extract an embedding feature of the palm print image by using the corrected attention parameter. The accurate embedding feature can be used for more accurately classifying a palm print category (such as an owner of a palm print in the palm print image) of the palm print image. The process of classifying the palm print category of the palm print image is a process of identifying the owner of the palm print in the palm print image (for example, identifying a user to which the palm print in the palm print image specifically belongs, to determine an identity of the owner of the palm print in the palm print image). For the specific process, refer to the related descriptions in the following embodiment corresponding to FIG. 6.

In this application, a first sample image can be obtained. The first sample image comprises a plurality of regions subjected to division, and if clarities of the regions are different, clarity types of the regions are different. In addition, an attention-based network can be invoked to perform attention degree recognition on the plurality of regions, to obtain a first region and a second region of the plurality of regions. The attention-based network comprises an attention parameter, and the attention-based network determines, based on the attention parameter, that an attention degree to the first region is higher than an attention degree to the second region. Further, a first predicted label can be added to the first region and a second predicted label can be added to the second region based on the respective attention degrees of the attention-based network to the first region and the second region. The first predicted label is used for indicating that the first region belongs to a first predicted clarity type, the second predicted label is used for indicating that the second region belongs to a second predicted clarity type, and a clarity indicated by the first predicted clarity type is higher than a clarity indicated by the second predicted clarity type. A first reference label of the first region and a second reference label of the second region can be obtained. The first reference label is used for indicating that the first region actually belongs to a first reference clarity type, and the second reference label is used for indicating that the second region actually belongs to a second reference clarity type. Therefore, the attention parameter can be corrected based on a difference between the first predicted label and the first reference label and a difference between the second predicted label and the second reference label. The attention-based network is configured to extract an embedding feature of a palm print image based on the corrected attention parameter. The embedding feature is used for identifying an owner of a palm print in the palm print image. It can be learned that, the method provided in this embodiment can add, by using an attention degree of the attention-based network to the region in the first sample image, the predicted label to the region of the first sample image, and a clarity of a clarity type indicated by a predicted label added for a region with a higher attention degree may be higher. Further, the attention parameter may be corrected according to the difference between a real label (for example, the reference label) and the predicted label of the region. Subsequently, the attention-based network can adopt a higher attention degree for a region with a higher clarity in the palm print image by using the corrected attention parameter, and adopt a lower attention degree for a region with a lower clarity in the palm print image, so that an image feature of the region with the higher clarity in the palm print image can be extracted to a greater extent, and finally a more accurate embedding feature of the palm print image is extracted. More accurate classification on the palm print image (that is, more accurate identification on an owner of the palm print in the palm print image) can be implemented by using the more accurate embedding feature of the palm print image.

Referring to FIG. 6, FIG. 6 is a schematic flowchart of a network training method according to various embodiments of this application. This application may be applied to a palm print recognition scenario. As shown in FIG. 6, the method may include the following operations:

Operation S201: Obtain a second sample image, where the second sample image is obtained by photographing a sample palm print, the second sample image having a reference palm print label indicating a real identity of the sample palm print.

In various embodiments, the image processing device may further obtain the second sample image. The second sample image may be an image obtained by photographing the sample palm print (which may be a palm print of any user). The second sample image may have the palm print label. The palm print label may be used for indicating the real category of the sample palm print. The real category may be used for indicating an actual owner of the sample palm print (for example, a user to which the sample palm print actually belongs, that is, a user of the palm print).

The attention-based network may be included in a palm print recognition network. The attention parameter (namely, the corrected attention parameter) obtained by correcting the attention parameter of the attention-based network by using the process described in the foregoing embodiment corresponding to FIG. 3 may be frozen in the palm print recognition network, so that in a subsequent process of training the palm print recognition network, the corrected attention parameter does not need to be corrected again. The palm print recognition network may be a network configured to identify (that is, classify) the palm print in the palm print image, to identify the owner of the palm print in the palm print image (for example, the user to which the palm print belongs). For example, the palm print recognition network includes, but is not limited to, a decision tree model, a support vector machine model, and the like.

In other words, the process in the foregoing embodiment corresponding to FIG. 3 may be understood as a previous operation of correcting the attention parameter of the attention-based network in the palm print recognition network. After the attention parameter of the attention-based network in the palm print recognition network is corrected, overall training may be performed on the palm print recognition network. In the training process, the corrected attention parameter may not be updated, but a network parameter other than the corrected attention parameter in the palm print recognition network may be updated, as described in the following content.

Operation S202: extract, by the trained attention-based network, a sample embedding feature of the second sample image.

In various embodiments, the attention-based network may belong to a sub-network in the palm print recognition network that is configured to extract a feature from the input image. In addition to the corrected attention parameter, network parameters of the attention-based network may further include another network parameter used for performing embedding (that is, feature extraction) on the input image.

Therefore, the image processing device may invoke the foregoing attention-based network in the palm print recognition network, perform embedding (that is, feature extraction) on the second sample image (to be specific, the input image of the attention-based network in this case) based on the foregoing corrected attention parameter and the another network parameter used for performing embedding on the input image, and may generate the sample embedding feature of the second sample image. In various embodiments, the sample embedding feature may be a feature vector. The sample embedding feature is a feature obtained by the attention-based network by learning the second sample image.

In various embodiments, there may be a plurality of second sample images, the plurality of second sample images may be images obtained by photographing the sample palm print from a plurality of photographing angles, and one photographing angle is used for photographing to obtain one second sample image of the sample palm print. Therefore, the process of generating the sample embedding feature in this application may include the following operations:

The image processing device may invoke the attention-based network to separately perform embedding on each second sample image based on the corrected attention parameter and the another network parameter used for performing embedding on the input image, to generate an image embedding feature of each second sample image. One second sample image may have an image embedding feature, and the image embedding feature of the second sample image is a feature learned by the attention-based network from the second sample image.

Further, the image processing device may fuse image embedding features of a plurality of second sample images, to generate the sample embedding feature. The sample embedding feature may be a feature obtained by fusing features of images (for example, the plurality of second sample images) of the sample palm print photographed from a plurality of angles.

Because the second sample images photographed from the photographing angles may include images of different clear regions of the sample palm print, the sample embedding feature is obtained by fusing the second sample images obtained from the photographing angles, so that the sample embedding feature includes features of the images of the clear regions of the sample palm print from the different photographing angles. In addition, the features of the images of the clear regions are more accurate than features of images of blurry regions. Therefore, the sample embedding feature generated in this manner is more accurate, and more accurate classification on the palm print category of the second sample image can also be implemented by using the sample embedding feature subsequently.

In various embodiments, the manner of fusing the image embedding features of the plurality of second sample images includes, but is not limited to, the following manner: stitching (for example, horizontal stitching) the image embedding features of the plurality of second sample images, to generate the sample embedding feature; or summing the image embedding features of the plurality of second sample images, to generate the sample embedding feature. Optionally, the generated sample embedding feature may also be a feature vector.

The process of summing the image embedding features of the plurality of second sample images may include: Dimensions of the image embedding features of the second sample images may be the same, and therefore, feature values on a same position in the image embedding features of the second sample images may be added together, to generate the sample embedding feature.

Operation S203: generate, by a recognition sub-network, a predicted palm print label of the sample palm print based on the sample embedding feature.

In various embodiments, the palm print recognition network may further include the recognition sub-network. The recognition sub-network may be configured to classify a palm print in the palm print image, to output a probability (which may constitute a probability distribution) that the palm print in the palm print image belongs to each user (which may be referred to as an object) in a user set (which may be a full set of users that need to be identified in an application scenario of palm print identification). In various embodiments, the recognition sub-network may be a fully connected network.

Therefore, the palm print recognition network may invoke the recognition sub-network to perform classification prediction on the sample palm print by using the foregoing sample embedding feature, to obtain the classification predicted result of the sample palm print. The classification predicted result may be a probability distribution (which may be represented as a vector) formed by the predicted probability that the sample palm print belongs to each of the users in the user set.

Operation S204: train, based on a difference between the reference palm print label and the predicted palm print label, the palm print recognition network to obtain a trained palm print recognition network .

In various embodiments, the image processing device may correct network parameters (which may include a network parameter used for embedding the image and a network parameter of the recognition sub-network that are of the attention-based network and other than the corrected attention parameter) other than the frozen corrected attention parameter in the palm print recognition network by using a difference (which may be represented by a cross-entropy loss) between the real category (which may also be represented as a vector, and in the vector, a probability at a position of a user indicated by the real category may be 1, and a probability at a position of another user may be 0) and the classification predicted result of the sample palm print, to obtain the trained palm print recognition network.

For example, iterative training may be continuously performed on the palm print recognition network by using the foregoing process, until the network parameters (the network parameters other than the frozen corrected attention parameter) of the palm print recognition network reaches a convergent state, or a quantity of iterative training times on the palm print recognition network is greater than or equal to a quantity threshold. In this case, the palm print recognition network obtained through training may be used as the trained palm print recognition network.

An attention-based network in the trained palm print recognition network is the trained attention-based network, and a recognition sub-network in the trained palm print recognition network is the trained recognition sub-network.

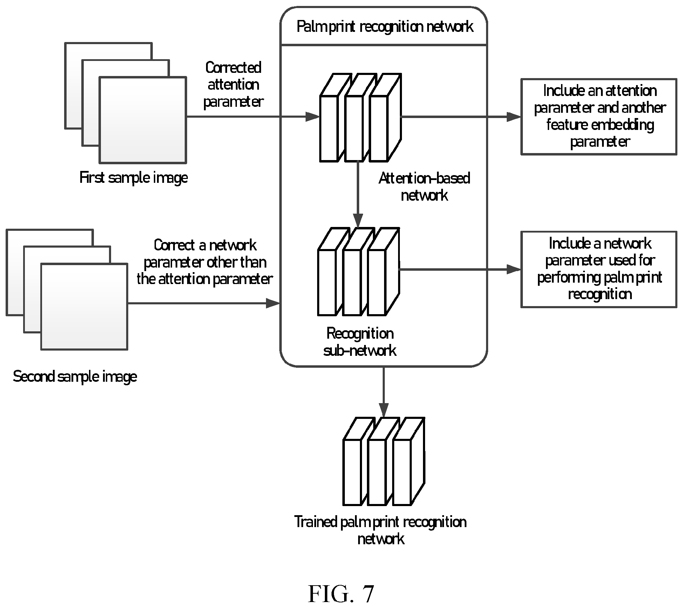

Referring to FIG. 7. FIG. 7 is a schematic diagram of a scenario of training a palm print recognition network according to various embodiments of this application. As shown in FIG. 7, first, the image processing device may correct the attention parameter of the attention-based network in the palm print recognition network by using the first sample image.

Further, network parameters (including feature embedding features of the attention-based network other than the corrected attention parameter, and the network parameter of the recognition sub-network used for performing palm print recognition) other than the corrected attention parameter in the palm print recognition network may be corrected by using the second sample image, and finally the trained palm print recognition network may be obtained.

Through the foregoing process, the palm print recognition network can be obtained through training, and the trained palm print recognition network may include a trained attention-based network and a trained recognition sub-network. Subsequently, accurate classification on the palm print image can be implemented by using the trained palm print recognition network, as described in the following content.

The image processing device may obtain a to-be-classified palm print image, and the palm print image may be an image obtained by photographing a target palm print (which may be a palm print of any user). In various embodiments, there may alternatively be a plurality of to-be classified palm print images, the plurality of palm print images may be images obtained by photographing the target palm print from a plurality of photographing angles, and one photographing angle may be used for photographing to obtain one palm print image of the target palm print.

The image processing device may invoke the trained attention-based network to perform embedding on the to-be-classified palm print image, to generate a target embedding feature of the to-be-classified palm print image. A generation principle of the target embedding feature is the same as that of the sample embedding feature, and may include:

The image processing device may invoke the trained attention-based network to separately perform embedding on each to-be-classified palm print image, to generate an image embedding feature of the palm print image, and may further fusing (for example, stitching or summing) image embedding features of a plurality of to-be-classified palm print images, to generate the target embedding feature.

Because the trained attention-based network includes the corrected attention parameter, the trained attention-based network can pay more attention to an image of a clear region in the palm print image by using the corrected attention parameter. Therefore, a more accurate target embedding feature of the to-be-classified palm print image can be generated.

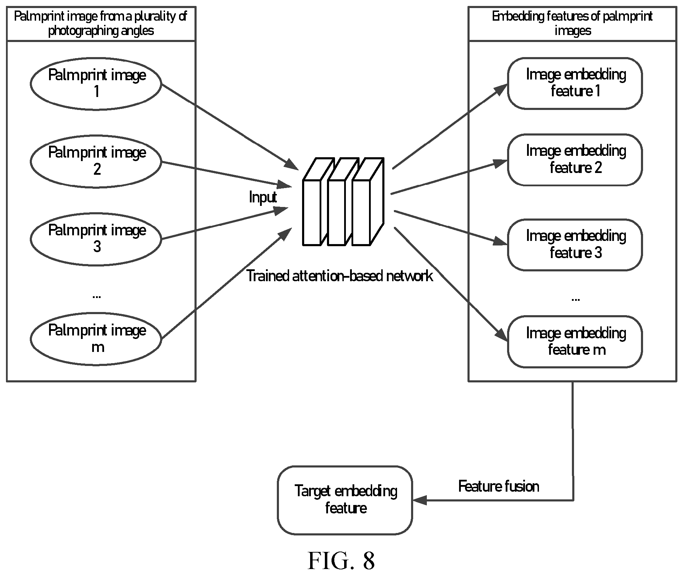

Referring to FIG. 8, FIG. 8 is a schematic diagram of a scenario of generating a target embedding feature according to various embodiments of this application. As shown in FIG. 8, the to-be-classified palm print images may include a palm print image 1 to a palm print image m obtained by photographing from a plurality of photographing angles, and the image processing device may invoke the trained attention-based network to perform embedding on the to-be-classified palm print images, to generate an image embedding feature 1 of the palm print image 1, an image embedding feature 2 of a palm print image 2, an image embedding feature 3 of a palm print image 3, ..., and an image embedding feature m of the palm print image m.

Further, feature fusion may be performed on the image embedding feature 1, the image embedding feature 2, the image embedding feature 3, ..., and the image embedding feature m that are generated, to generate the target embedding feature.

Further, the image processing device may invoke the trained recognition sub-network to perform classification prediction on the target palm print by using the generated target embedding feature, to obtain a target category of the target palm print. The target category may represent a user corresponding to a maximum probability predicted by the trained recognition sub-network in probabilities that the target palm print belongs to users in the user set. The user is an owner of the predicted target palm print, that is, the target category may be used for indicating the owner of the target palm print obtained through classification.

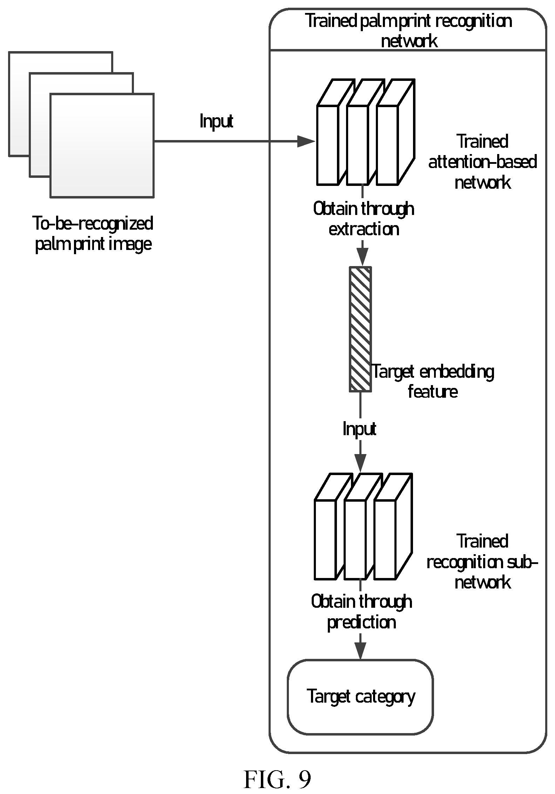

Referring to FIG. 9, FIG. 9 is a schematic diagram of a scenario of palm print prediction according to various embodiments of this application. As shown in FIG. 9, the image processing device may input the to-be-classified palm print image to the trained palm print recognition network, to invoke the trained attention-based network in the trained palm print recognition image to extract the target embedding feature of the to-be-classified palm print image.

Further, the trained recognition sub-network in the trained palm print recognition image may be invoked to obtain the target category of the target palm print in the to-be-classified palm print image through classification prediction by using the generated target embedding feature.

In a feasible implementation, the palm print image may be a palm print image photographed in real time by using a palm print capturing device (for example, a device that initiates an execution request for a target service) after a service initiator (which may be a service account, and the service account may belong to a service user) initiates (for example, initiates in a service platform) the execution request for the target service.

Therefore, if the target type is used for indicating that the owner of the target palm print is the service initiator (that is, a service user to which the service initiator belongs), the target service may be executed (dealt) for the service initiator, that is, the target service is provided for the service initiator.

Through the foregoing process, after accurate classification and identification of the palm print image is implemented, corresponding security processing can be performed on a related service.

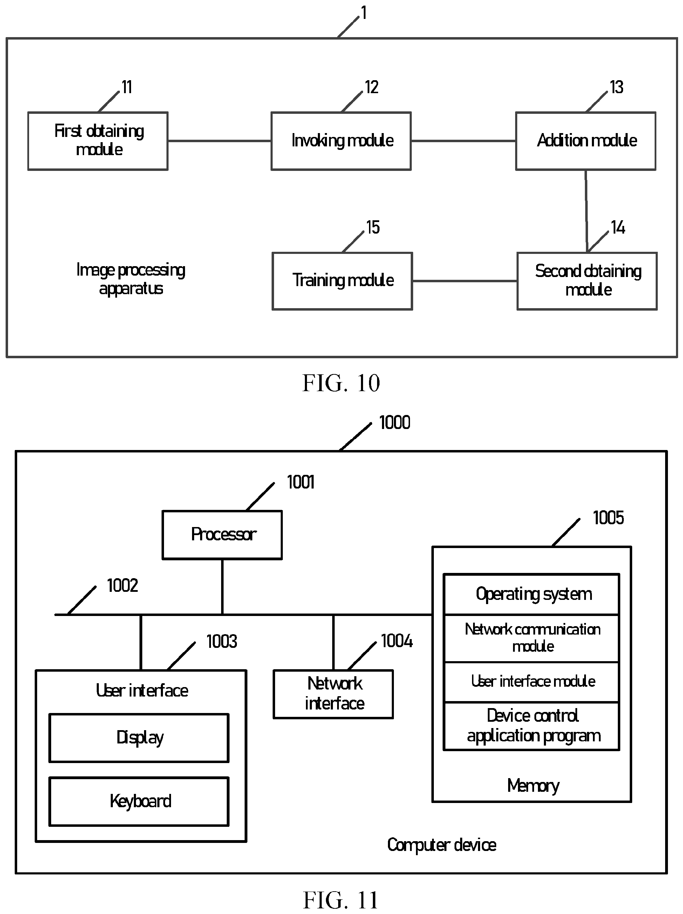

Referring to FIG. 10, FIG. 10 is a schematic structural diagram of an image processing apparatus according to various embodiments of this application. As shown in FIG. 10, the image processing apparatus 1 may include: a first obtaining module 11, an invoking module 12, an addition module 13, a second obtaining module 14, and a training module 15.

The first obtaining module 11 is configured to obtain a first sample image, wherein the first sample image is segmented into a plurality of regions .

The invoking module 12 is configured to invoke an attention-based network to assign an attention weight for each of the plurality of regions.

The addition module 13 is configured to generate a predicted clarity label for each of the plurality of regions based on weight ranges that their respective attention weights fall in; wherein a mapping relationship between the weight ranges and clarity labels are preconfigured, such that a higher weight range corresponds to a clarity type indicative of a higher clarity quality.

The second obtaining module 14 is configured to obtain a reference clarity label of each of the plurality of regions .

The training module 15 is configured to train the attention-based network based on a difference between the predicted clarity label and the reference label of each of the plurality of regions to obtain a trained attention-based network applicable in a palm print recognition network.

In various embodiments, the manner in which the invoking module 12 invokes the attention-based network to perform attention degree recognition on the plurality of regions, to obtain the first region and the second region includes:
invoking the attention-based network to determine an attention weight of each region of the plurality of regions based on the attention parameter, an attention weight of any region being used for reflecting an attention degree of the attention-based network to the region; and
using a region of the plurality of regions whose attention weight is in a first weight range as the first region, and using a region of the plurality of regions whose attention weight is in a second weight range as the second region;
a weight value in the first weight range being greater than a weight value in the second weight range.

In various embodiments, the attention-based network is comprised in a palm print recognition network, the corrected attention parameter is frozen in the palm print recognition network, the palm print recognition network further comprises recognition sub-network, and the apparatus 1 is further configured to:
obtain a second sample image, the second sample image being an image obtained by photographing a sample palm print, the second sample image having a palm print label, and the palm print label being used for indicating a real category of the sample palm print;
invoke the attention-based network to perform embedding on the second sample image based on the corrected attention parameter, to generate a sample embedding feature of the second sample image;
invoke the recognition sub-network to perform classification prediction on the sample palm print based on the sample embedding feature, to obtain a classification predicted result of the sample palm print; and
correct, based on a difference between the real category and the classification predicted result, a network parameter in the palm print recognition network other than the frozen corrected attention parameter, to obtain a trained palm print recognition network.

In various embodiments, there are a plurality of second sample images, the plurality of second sample images are images obtained by photographing the sample palm print from a plurality of photographing angles, and one photographing angle is used for photographing to obtain one second sample image of the sample palm print.

A manner in which the apparatus 1 invokes the attention-based network to perform embedding on the second sample image based on the corrected attention parameter, to generate a sample embedding feature of the second sample image comprises:
invoking the attention-based network to separately perform embedding on each second sample image based on the corrected attention parameter, to generate an image embedding feature of the second sample image; and
fusing image embedding features of the plurality of second sample images, to generate the sample embedding feature.

In various embodiments, a manner in which the apparatus 1 fuses image embedding features of the plurality of second sample images, to generate the sample embedding feature includes:
stitching the image embedding features of the plurality of second sample images, to generate the sample embedding feature; or
summing the image embedding features of the plurality of second sample images, to generate the sample embedding feature.

In various embodiments, the trained palm print recognition network comprises a trained attention-based network and a trained recognition sub-network, and the apparatus 1 is further configured to:
obtaining a to-be-classified palm print image, the palm print image being an image obtained by photographing a target palm print;
invoking the trained attention-based network, to perform embedding on the palm print image, to generate a target embedding feature of the palm print image; and
invoking the trained recognition sub-network to perform classification prediction on the target palm print based on the target embedding feature, to obtain a target category of the target palm print.

In various embodiments, there are a plurality of palm print images, the plurality of palm print images are images obtained by photographing the target palm print from a plurality of photographing angles, and one photographing angle is used for photographing to obtain one palm print image of the target palm print.

A manner in which the apparatus 1 invokes the trained attention-based network, to perform embedding on the palm print image, to generate a target embedding feature of the palm print image comprises:
invoking the trained attention-based network, to separately perform embedding on each palm print image, to generate an image embedding feature of the palm print image; and
fusing image embedding features of the plurality of palm print images, to generate the target embedding feature.

In various embodiments, the target category is used for indicating an owner of the target palm print, and the palm print image is obtained through photographing after a service initiator initiates an execution request for a target service.

The apparatus 1 is further configured to:
execute the target service on the service initiator if the target category is used for indicating that the owner of the target palm print is the service initiator.

In various embodiments, a manner in which the second obtaining module 14 obtains a first reference label of the first region and a second reference label of the second region includes:
invoking a trained clarity classification network to perform classification prediction on a clarity of the first region, to obtain a first reference clarity type of the first region;
invoking the trained clarity classification network to perform classification prediction on a clarity of the second region, to obtain a second reference clarity type of the second region; and
adding the first reference label for the first region based on the first reference clarity type, and adding the second reference label for the second region based on the second reference clarity type.

In various embodiments, the apparatus 1 is further configured to:
obtain a third sample image and a clarity classification network that needs to be trained, the third sample image having a clarity label, and the clarity label being used for indicating a real clarity type of the third sample image;
invoke the clarity classification network that needs to be trained to perform classification prediction on a clarity type of the third sample image, to obtain a predicted clarity type of the third sample image; and
correct, based on a difference between the real clarity type and the predicted clarity type, a network parameter of the clarity classification network that needs to be trained, to obtain the trained clarity classification network.

In various embodiments, a manner in which the second obtaining module 14 obtains a first reference label of the first region and a second reference label of the second region includes:
invoking a trained image segmentation network to perform image segmentation on the first sample image, to obtain a plurality of segmented images of the first sample image, one segmented image corresponding to one clarity type;
using a segmented image having a highest coincidence degree with the first region in the plurality of segmented images as a first clarity matching image of the first region, and adding the first reference label for the first region based on a clarity type corresponding to the first clarity matching image; and
using a segmented image having a highest coincidence degree with the second region in the plurality of segmented images as a second clarity matching image of the second region, and adding the second reference label for the second region based on a clarity type corresponding to the second clarity matching image;
the first reference clarity type being a clarity type corresponding to the first clarity matching image, and the second reference clarity type being a clarity type corresponding to the second clarity matching image.

According to various embodiments of this application, operations involved in the image processing method shown in FIG. 3 may be executed by the modules in the image processing apparatus 1 shown in FIG. 10. For example, operation S101 shown in FIG. 3 may be performed by the first obtaining module 11 shown in FIG. 10; operation S102 shown in FIG. 3 may be performed by the invoking module 12 shown in FIG. 10; operation S103 shown in FIG. 3 may be performed by the addition module 13 shown in FIG. 10; operation S104 shown in FIG. 3 may be performed by the second obtaining module 14 shown in FIG. 10; and operation S105 shown in FIG. 3 may be performed by the correction module 15 shown in FIG. 10.

In this application, a first sample image can be obtained. The first sample image comprises a plurality of regions subjected to division, and if clarities of the regions are different, clarity types of the regions are different. In addition, an attention-based network can be invoked to perform attention degree recognition on the plurality of regions, to obtain a first region and a second region of the plurality of regions. The attention-based network comprises an attention parameter, and the attention-based network determines, based on the attention parameter, that an attention degree to the first region is higher than an attention degree to the second region. Further, a first predicted label can be added to the first region and a second predicted label can be added to the second region based on the respective attention degrees of the attention-based network to the first region and the second region. The first predicted label is used for indicating that the first region belongs to a first predicted clarity type, the second predicted label is used for indicating that the second region belongs to a second predicted clarity type, and a clarity indicated by the first predicted clarity type is higher than a clarity indicated by the second predicted clarity type. A first reference label of the first region and a second reference label of the second region can be obtained. The first reference label is used for indicating that the first region actually belongs to a first reference clarity type, and the second reference label is used for indicating that the second region actually belongs to a second reference clarity type. Therefore, the attention parameter can be corrected based on a difference between the first predicted label and the first reference label and a difference between the second predicted label and the second reference label. The attention-based network is configured to extract an embedding feature of a palm print image based on the corrected attention parameter. The embedding feature is used for identifying an owner of a palm print in the palm print image. It can be learned that, the apparatus provided in this embodiment can add, by using an attention degree of the attention-based network to the region in the first sample image, the predicted label to the region of the first sample image, and a clarity of a clarity type indicated by a predicted label added for a region with a higher attention degree may be higher. Further, the attention parameter may be corrected according to the difference between a real label (for example, the reference label) and the predicted label of the region. Subsequently, the attention-based network can adopt a higher attention degree for a region with a higher clarity in the palm print image by using the corrected attention parameter, and adopt a lower attention degree for a region with a lower clarity in the palm print image, so that an image feature of the region with the higher clarity in the palm print image can be extracted to a greater extent, and finally a more accurate embedding feature of the palm print image is extracted. More accurate classification on the palm print image (that is, more accurate identification on an owner of the palm print in the palm print image) can be implemented by using the more accurate embedding feature of the palm print image.

According to various embodiments of this application, the modules in the image processing apparatus 1 shown in FIG. 10 may be separately or wholly combined into one unit or several units, or one (or some) of the units herein may further be divided into a plurality of functionally smaller subunits, which can implement same operations without affecting implementation of the technical effects of this embodiment of this application. The foregoing modules are divided based on logical functions. In an actual application, a function of one module may also be implemented by a plurality of units, or functions of a plurality of modules are implemented by one unit. In other embodiments of this application, the image processing apparatus 1 may also include other units. In an actual application, the functions may alternatively be cooperatively implemented by other units and may be implemented with collaboration by a plurality of units.

According to various embodiments of this application, a computer program that can perform operations in the corresponding method shown in embodiments of this application may be run on a general computer device (the computer device may include processing elements and storage elements such as a central processing unit (CPU), a random access storage medium (RAM), and a read-only storage medium (ROM)), to construct the image processing apparatus 1 shown in FIG. 10. The computer program may be recorded in, for example, a computer-readable recording medium, and may be loaded into the foregoing computer device by using the computer-readable recording medium, and run in the computer device.

Referring to FIG. 11, FIG. 11 is a schematic structural diagram of a computer device according to various embodiments of this application. As shown in FIG. 11, a computer device 1000 may include a processor 1001, a network interface 1004, and a memory 1005. In addition, in some embodiments, the computer device 1000 may further include: a user interface 1003 and at least one communication bus 1002. The communication bus 1002 is configured to implement connection and communication between these components. The user interface 1003 may include a display and a keyboard. In various embodiments, the user interface 1003 may further include a standard wired interface or wireless interface. In various embodiments, the network interface 1004 may include a standard wired interface or a standard wireless interface (such as a Wi-Fi interface). The memory 1005 may be a high-speed RAM memory, or may be a non-volatile memory, such as at least one magnetic disk memory. In various embodiments, the memory 1005 may alternatively be at least one storage apparatus that is located far away from the foregoing processor 1001. As shown in FIG. 11, the memory 1005, which is a type of computer storage medium, may include an operating system, a network communication module, a user interface module, and a device control application program.

In the computer device 1000 shown in FIG. 11, the network interface 1004 may provide a network communication function; the user interface 1003 is mainly an interface configured to provide input for a user; and the processor 1001 may be configured to invoke the device control application program stored in the memory 1005, to implement the following operations:
obtaining a first sample image, the first sample image comprising a plurality of regions subjected to division, and if clarities of the regions are different, clarity types of the regions being different;
invoking an attention-based network to perform attention degree recognition on the plurality of regions, to obtain a first region and a second region of the plurality of regions, the attention-based network comprising an attention parameter, and the attention-based network determining, based on the attention parameter, that an attention degree to the first region is higher than an attention degree to the second region;
adding a first predicted label to the first region and adding a second predicted label to the second region based on the respective attention degrees of the attention-based network to the first region and the second region, the first predicted label being used for indicating that the first region belongs to a first predicted clarity type, the second predicted label being used for indicating that the second region belongs to a second predicted clarity type, and a clarity indicated by the first predicted clarity type being higher than a clarity indicated by the second predicted clarity type;
obtaining a first reference label of the first region and a second reference label of the second region, the first reference label being used for indicating that the first region belongs to a first reference clarity type, and the second reference label being used for indicating that the second region belongs to a second reference clarity type; and
correcting the attention parameter based on a difference between the first predicted label and the first reference label and a difference between the second predicted label and the second reference label, the attention-based network being configured to extract an embedding feature of a palm print image based on the corrected attention parameter, and the embedding feature being used for identifying an owner of a palm print in the palm print image.

The computer device 1000 described in this embodiment of this application may perform the descriptions of the foregoing image processing method in the embodiments of this application, or may perform the descriptions of the foregoing image processing apparatus 1 in the foregoing embodiment corresponding to FIG. 10. Details are not described herein again. In addition, descriptions of beneficial effects of using the same method are not described herein again.

In addition, this application further provides a computer-readable storage medium, having a computer program stored therein. When executing the computer program, a processor can perform the descriptions of the image processing method in embodiments of this application. Therefore, details are not described herein again. In addition, descriptions of beneficial effects of using the same method are not described herein again. For technical details not disclosed in the embodiment of the computer storage medium in this application, refer to the descriptions of method embodiments of this application.

In an example, the foregoing computer program may be deployed to be executed on one computer device, on a plurality of computer devices located at one place, or on a plurality of computer devices distributed at a plurality of places and interconnected through a communication network. The plurality of computer devices distributed at the plurality of places and interconnected through the communication network may form a blockchain system.

The foregoing computer-readable storage medium may be an internal storage unit of the foregoing computer device, for example, a hard disk or memory of the computer device. The computer-readable storage medium may be an external storage device of the computer device, for example, a removable hard disk drive, a smart media card (SMC), a secure digital (SD) card, or a flash card equipped on the computer device. Further, the computer-readable storage medium may alternatively include both an internal storage unit and an external storage device of the computer device. The computer-readable storage medium is configured to store the computer program and other programs and data that are required by the computer device. The computer-readable storage medium may be further configured to temporarily store data that has been outputted or is to be outputted.

This application provides a computer program product, including a computer program, the computer program being stored in a computer-readable storage medium. A processor of a computer device reads the computer program from the computer-readable storage medium, and the processor executes the computer program, to cause the computer device to perform the descriptions of the foregoing image processing method in embodiments of this application. Therefore, details are not described herein again. In addition, descriptions of beneficial effects of using the same method are not described herein again. For technical details not disclosed in the embodiment of the computer-readable storage medium in this application, refer to the descriptions of the method embodiments of this application.

In the specification, claims, and accompanying drawings of embodiments of this application, the terms "first" and "second" are intended to distinguish between different objects but do not indicate a particular order. In addition, the term "include" or any variation thereof is intended to cover a non-exclusive inclusion. For example, a process, method, apparatus, product, or device that includes a series of steps or modules is not limited to the listed steps or units; and instead, further includes an operation or module that is not listed, or further includes another operation or unit that is intrinsic to the process, method, apparatus, product, or device.

A person of ordinary skill in the art may be aware that, units and algorithm operations of the examples described in the foregoing embodiments provided in this specification may be implemented by electronic hardware, computer software, or a combination thereof. To clearly describe the interchangeability between the hardware and the software, the foregoing has generally described compositions and operations of each example based on functions. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of the present application.

The foregoing disclosed embodiments are merely embodiments of this application, and it is clear that, the scope of the claims of this application is not limited thereto. Therefore, any equivalent modification made according to the claims of this application shall fall within the scope of this application.

## Claims

1. An image processing method, the method comprising:
obtaining a first sample image, wherein the first sample image is segmented into a plurality of non-overlapped regions;
assigning, by an attention-based network, an attention weight for each of the plurality of regions;
generating a predicted clarity label for each of the plurality of regions based on weight ranges that their respective attention weights fall in; wherein a mapping relationship between the weight ranges and clarity labels are preconfigured, such that a higher weight range corresponds to a clarity label indicative of a higher clarity quality;
obtaining a reference clarity label of each of the plurality of regions; and
training the attention-based network based on a difference between the predicted clarity label and the reference clarity label of each of the plurality of regions to obtain a trained attention-based network applicable in a palm print recognition network.

2. The method according to claim 1, wherein the assigning, by the attention-based network, the attention weight for each of the plurality of regions comprises:
assigning, by the attention-based network, the attention weight for each of the plurality of regions based on an attention parameter of the attention-based network, the attention weight of each region reflects an attention degree of the attention-based network to the region; and
there are two weight ranges including a first weight range and a second weight range; regions whose attention weights fall within the first weight range are first regions, and regions whose attention weights fall within the second weight range are second regions;
weight values in the first weight range being greater than weight values in the second weight range.

3. The method according to claim 1 or 2, wherein the trained attention-based network is comprised in the palm print recognition network, parameters of the trained attention parameter are frozen during training of the palm print recognition network, the palm print recognition network further comprises a recognition sub-network, and the method further comprises:
obtaining a second sample image, the second sample image is obtained by photographing a sample palm print, the second sample image having a reference palm print label indicating a real identity of the sample palm print;
extracting, by the trained attention-based network, a sample embedding feature of the second sample image;
generating, by the recognition sub-network, a predicted palm print label of the sample palm print based on the sample embedding feature; and
training, based on a difference between the reference palm print label and the predicted palm print label, the palm print recognition network to obtain a trained palm print recognition network.

4. The method according to any one of claims 1 to 3, wherein the number of the second sample image is plural, the plurality of second sample images are obtained by photographing the sample palm print from a plurality of photographing angles; and
the extracting, by the attention-based network, the sample embedding feature of the second sample image comprises:
extracting, by the attention-based network, an image embedding feature from each of the plurality of second sample images; and
fusing image embedding features of the plurality of second sample images, to generate the sample embedding feature.

5. The method according to any one of claims 1 to 4, wherein the fusing the image embedding features of the plurality of second sample images, to generate the sample embedding feature comprises:
concatenating the image embedding features of the plurality of second sample images, to generate the sample embedding feature; or
adding up the image embedding features of the plurality of second sample images, to generate the sample embedding feature.

6. The method according to any one of claims 1 to 5, further comprising:
obtaining a palm print image of a target palm print;
extracting, by the trained attention-based network, a target embedding feature of the palm print image; and
generating, by the trained recognition sub-network, a predicted palm print label for the target palm print based on the target embedding feature, the predicted palm print label indicating an identity of the target palm print.

7. The method according to any one of claims 1 to 6, wherein the number of the palm print image is plural, the plurality of palm print images are obtained by photographing the target palm print from a plurality of photographing angles; and
the extracting, by the trained attention-based network, the target embedding feature of the palm print image comprises:
extracting, by the trained attention-based network, an image embedding feature from each of the plurality of the palm print images; and
fusing image embedding features of the plurality of palm print images, to generate the target embedding feature.

8. The method according to any one of claims 1 to 7, wherein the photographing is triggered by a target service; and
the method further comprises:
executing the target service if the predicted palm print label indicates that the identity of the target palm print is legal.

9. The method according to any one of claims 1 to 8, wherein the obtaining the reference clarity label of each of the plurality of regions comprises:
extracting, by a trained clarity classification network information indicative of clarity level from pixel-level representations of each of the plurality of regions;
mapping the information indicative of the clarity level of each of the plurality of regions to their respective reference clarity label.

10. The method according to any one of claims 1 to 9, further comprising:
obtaining a third sample image and an untrained clarity classification network, the third sample image having a clarity label indicating a real clarity type of the third sample image;
generating, by the untrained clarity classification network, a predicted clarity type of the third sample image; and
training, based on a difference between the real clarity type and the predicted clarity type, the untrained clarity classification network, to obtain the trained clarity classification network.

11. The method according to any one of claims 1 to 10, wherein the obtaining the reference clarity label of each of the plurality of regions comprises:
segmenting, by a trained image segmentation network, the first sample image into a plurality of sub-images according to a clarity degree of each pixel of the first sample image, wherein each sub-image has a clarity type indicating its clarity level;
for each of the plurality of regions, selecting from the plurality of sub-images, an image having the most overlapping area with the region as a matching sub-image of the region, and adding the reference clarity label for the region based on the clarity type of its matching sub-image.

12. An image processing apparatus, the apparatus comprising:
a first obtaining module, configured to obtain a first sample image, wherein the first sample image is segmented into a plurality of regions;
an invoking module, configured to invoke an attention-based network to assign an attention weight for each of the plurality of regions;
an addition module, configured to generate a predicted clarity label for each of the plurality of regions based on weight ranges that their respective attention weights fall in; wherein a mapping relationship between the weight ranges and clarity labels are preconfigured, such that a higher weight range corresponds to a clarity type indicative of a higher clarity quality;
a second obtaining module, configured to obtain a reference clarity label of each of the plurality of regions; and
a training module, configured to train the attention-based network based on a difference between the predicted clarity label and the reference label of each of the plurality of regions to obtain a trained attention-based network applicable in a palm print recognition network.

13. A computer program product, comprising a computer program, the computer program being executed by a processor to implement operations of the method according to any one of claims 1 to 11.

14. A computer device, comprising a memory and a processor, the memory having a computer program stored therein, and the computer program, when executed by the processor, causing the processor to perform operations of the method according to any one of claims 1 to 11.

15. A computer-readable storage medium, having a computer program stored therein, the computer program being adapted to be loaded by a processor to perform operations of the method according to any one of claims 1 to 11.
